# EUROPÄISCHE PATENTSCHRIFT

(11) **EP 4 004 291 B1**
(45) Veröffentlichungstag und Bekanntmachung des Hinweises auf die Patenterteilung: **17.01.2024**
(21) Anmeldenummer: 20742685.9
(22) Anmeldetag: 15.07.2020
(51) Int. Cl.: E02B 17/00, E02B 17/02, E02D 27/42, E04H 12/10, F03D 13/20

(54) **TRAGSTRUKTUR, INSBESONDERE FÜR ON- UND/ODER OFFSHORE-WINDENERGIEANLAGEN**
SUPPORT STRUCTURE, IN PARTICULAR FOR ONSHORE AND/OR OFFSHORE WIND TURBINES
STRUCTURE DE SUPPORT, EN PARTICULIER POUR ÉOLIENNES EN MER ET/OU SUR TERRE

(30) Priorität: 29.07.2019 DE 202019104155 U
(43) Veröffentlichungstag der Anmeldung: 01.06.2022
(73) Patentinhaber: ThyssenKrupp Steel Europe AG, 47166 Duisburg (DE)
(72) Erfinder: REALES, Emilio Bertomeo, 27753 Delmenhorst (DE)
(74) Vertreter: ThyssenKrupp Steel Europe AG
(86) Internationale Anmeldenummer: PCT/EP2020/069957
(87) Internationale Veröffentlichungsnummer: WO 2021/018583

(56) Entgegenhaltungen:
- EP-A1- 3 056 611
- DE-U1-202012 002 729

## Beschreibung

Die vorliegende Erfindung betrifft eine Tragstruktur insbesondere für On- und/oder Offshore-Windenergieanlagen, mit einem ersten im Betrieb unteren Ende, welches einem die Tragstruktur aufnehmendem Untergrund zugewandt ist, und einem dem ersten Ende gegenüberliegend angeordneten zweiten oberen Ende. Des Weiteren betrifft die Erfindung eine Gründungstruktur für On- und/oder Offshore-Windenergieanlagen.

Bekannte Tragstrukturen werden verwendet, um beispielsweise Windenergieanlagen mit einem Untergrund, wie beispielsweise dem Meeresgrund, zu verbinden und den Abstand zwischen Meeresgrund und Gewässeroberfläche zu überbrücken. Wegen der in der Vergangenheit stetig zunehmenden Leistung an erzeugter Energie durch die aufgestellten Windenergieanlagen und der damit einhergehenden Vergrößerung in deren Abmessungen der Windenergieanlagen, nimmt die sichere Befestigung im Untergrund der Windenergieanlagen einen wichtigen Stellenwert ein. Insbesondere durch die größeren Abmessungen der Windenergieanlagen und dem damit steigenden Eigengewicht, bietet das Verteilen der Gewichtskraft über einen größeren Flächenbereich Vorteile bei der Krafteinleitung in den Untergrund.

Eine Tragstruktur ist beispielhaft aus der DE 20 2012 002 729 U1 bekannt.

Zu diesem Zweck kommen insbesondere im Bereich der Offshore-Windenergieanlagen Tragstrukturen in Form eines Gittermastturmes, auch bezeichnet als Jacket-Abschnitt, zum Einsatz. Mit solchen Jacket-Abschnitten wird die Gewichtskraft aus dem Turm über wenigstens drei oder vier Außenpfähle, die untereinander über Streben miteinander verbunden sind, auf einen Flächenbereich im Untergrund verteilt eingeleitet, der häufig das Vielfache der Fläche des mit der Tragstruktur zu verbindende unteren Turmendes aufweist.

Zudem können auch auf die Windenergieanlage einwirkende Windlasten, die ein Moment im Verbindungsbereich zum Untergrund erzeugen, über die als Jacket-Abschnitt ausgebildeten Tragstrukturen verbessert aufgefangen werden. Dazu ist ebenfalls eine effiziente Kraftverteilung vom zweiten, oberen Ende der Tragstruktur in Richtung des ersten, unteren Endes der Tragstruktur entscheidend. Insbesondere bei einem auf die Tragstruktur wirkenden Moment soll eine gleichmäßige Verteilung der wirkenden Kräfte über sämtliche am unteren Ende der Tragstruktur vorgesehenen Kopplungsmittel in ein mit dem Untergrund verbundenes Fundament mit mehreren, im Untergrund verankerten Rammpfählen erreicht werden.

Insbesondere wird versucht, die auf die Windenergieanlage einseitig wirkende Windlast und das daraus resultierende, auf die Tragstruktur einwirkende Moment gleichmäßig über den Umfang der Tragstruktur an dessen unteren Ende zu verteilen und demnach eine übermäßige Beanspruchung der Tragstruktur, die ähnlich einer Fachwerkkonstruktion, vorzugsweise aus Stahl, ausgebildet ist, zu vermeiden. Damit soll dem Risiko des Materialversagens entgegengewirkt und notwendige Reparaturen und Instandhaltungen auf ein Minimum beschränkt werden.

Vor diesem Hintergrund lag der vorliegenden Erfindung die Aufgabe zugrunde, eine Tragstruktur, insbesondere für Onshore- und/oder Offshore-Windenergieanlagen anzugeben, welche eine bevorzugt gleichmäßige Kraftverteilung vom oberen, zweiten Ende in Richtung des ersten, unteren Endes der Tragstruktur ermöglicht.

Die Erfindung löst die ihr zugrundeliegende Aufgabe bei einer Tragstruktur, insbesondere für On- oder Offshore-Windenergieanlagen mit den Merkmalen nach Anspruch 1. Insbesondere sind mehrere sich im Wesentlichen vom unteren zum oberen Ende der Tragstruktur erstreckende und im Betrieb unter einem Winkel gegenüber einer Vertikalen geneigte Stützstreben vorgesehen, wobei die Stützstreben mehrerer bogenförmig gekrümmte Strebenabschnitte aufweisen, und zwei benachbart zueinander angeordnete Stützstreben im Bereich ihrer gekrümmten Strebenabschnitte mittels wenigstens eines plattenförmigen Verbindungselements miteinander verbunden sind.

Erfindungsgemäß wird hier der Ansatz verfolgt, dass die mehreren Stützstreben sich durchgängig vom unteren zum oberen Ende der Tragstruktur erstrecken, wodurch vorzugsweise entlang der Stützstreben keine Unterbrechung in der Kraftleitung auftritt. Zudem erfolgt durch den gekrümmten Verlauf entlang der Stützstreben, also in Strebenrichtung, und mittels der plattenförmigen Verbindungselemente, die zwei benachbart zueinander angeordnete Stützstreben im Bereich ihrer gekrümmt verlaufenden Strebenabschnitte miteinander verbinden, die Ausbildung eines besonders vorteilhaften Kraftübertragungs-Knotenpunktes. Eine vor einem solchen Kraftübertragungs-Knotenpunkt in nur einer Stützstrebe wirkende Kraft wird innerhalb des Kraftübertragungs-Knotenpunktens bevorzugt gleichmäßig auf beide Stützstreben aufgeteilt. Demnach ist die Kraft nach dem Kraftübertragungs-Knotenpunkt in beiden Stützstreben etwa halbiert. Insgesamt wird durch die erfindungsgemäß Ausgestaltung im Bereich eines Kraftübertragungs-Knotenpunktes eine vergleichmäßigte Kraftverteilung innerhalb der Tragstruktur erreicht.

Gemäß einer vorteilhaften Weiterbildung der erfindungsgemäßen Tragstruktur verlaufen die miteinander verbundenen Strebenabschnitte entgegengesetzt gekrümmt und sind im Bereich ihrer Außenseiten miteinander verbunden. Bevorzugt erstrecken sich die einander gegenüberliegenden Enden der beiden gekrümmten Strebenabschnitte im Bereich eines Kraftübertragungs-Knotenpunktes in entgegengesetzte Richtungen. Die mit den gegenüberliegenden Enden der gekrümmten Strebenabschnitte verbundenen geraden Strebenabschnitte der benachbarten Stützstreben verlaufen im Wesentlichen fluchtend zueinander, was die Kraftüberleitung bzw. Kraftaufteilung in Kraftrichtung vor dem Knotenpunkt von einer Stützstrebe auf die beiden Stützstreben nach einem Kraftübertragungs-Knotenpunkt weiter unterstützt.

Vorzugsweise sind die Strebenabschnitte jeweils über ihre konvex gebogenen Außenflächen miteinander verbunden. Bevorzugt ist das plattenförmige Verbindungselement mit den konvex gebogenen Außenflächen der Strebenabschnitte stoffschlüssig verbunden, insbesondere mit den Außenflächen verschweißt. Darüber ist eine hohe Festigkeit in der Verbindung im Kraftübertragungs-Knotenpunkt zwischen dem wenigstens einen, plattenförmigen Verbindungselement und den gekrümmten Strebenabschnitten erreicht. In einer Ausführungsform der Erfindung ist der bogenförmige Strebenabschnitt an seiner konvex gebogenen Außenfläche in Strebenrichtung über zumindest die Hälfte der Länge des Strebenabschnitts bevorzugt mehr als 85 %der Länge des Strebenabschnitts mit dem plattenförmigen Verbindungselement gekoppelt.

Zudem ist durch die entgegengesetzte Krümmung der miteinander verbundenen bogenförmigen Strebenabschnitte erreicht, dass die daran befestigten geraden Strebenabschnitte nicht einander kreuzen. Zwei gerade Strebenabschnitte an benachbarten Ende der verschiedenen gekrümmten Strebenabschnitte verlaufen in einem Winkel im Bereich von etwa 40° bis 80°, zueinander.

Gemäß einer Weiterbildung sind im Betrieb der erfindungsgemäßen Tragstruktur mehrere miteinander verbundene bogenförmige Strebenabschnitte im Wesentlichen auf gleicher Höhe der Tragstruktur angeordnet. Mehrere erfindungsgemäße Kraftübertragungs-Knotenpunkte sind auf gleicher Höhe der Tragstruktur bevorzugt gleichmäßig über den Umfang der Tragstruktur herum verteilt angeordnet., wodurch die Kraftverteilung an der Tragstruktur weiter vergleichmäßigt ist. Bevorzugt sind gemäß einer Ausführungsform der erfindungsgemäßen Tragstruktur entlang der Stützstreben mehrere Kraftübertragungs-Knotenpunkte auf unterschiedlichen Höhen der Tragstruktur angeordnet, wobei zwei in der Höhe unmittelbar übereinander angeordnete Kraftübertragungs-Knotenpunkte in einem Winkel um die Mittenachse der Tragstruktur herum versetzt angeordnet sind. Der Winkelversatz entspricht bevorzugt der Hälfte eines Vollkreises.

Eine bevorzugte Weiterbildung der Tragstruktur sieht vor, dass das Verbindungselement sich im Wesentlichen in Strebenrichtung der Stützstreben erstreckt, bevorzugt parallel zur Mittenachse der damit verbundenen bogenförmigen Strebenabschnitte verläuft. Ein solcher Kraftübertragungs-Knotenpunkt ist zwischen zwei Stützstreben ausgebildet, die bevorzugt in einer Ebene vom ersten in Betrieb unteren Ende bis zum zweiten, im Betrieb oberen Ende verlaufen. Ein solcher Kraftübertragungs-Knotenpunkt wird auch als "Snake-X-Node" bezeichnet. Das plattenförmige Verbindungselement bzw. die Verbindungsplatte, verläuft in einer bevorzugten Ausführungsform in einer gemeinsamen Ebene mit den Mittenachsen der damit verbundenen bogenförmigen Strebenabschnitte sowie mit den Mittenachsen der jeweils an den gekrümmten Strebenabschnitten endseitig befestigten geraden Strebenabschnitten der Stützstreben.

Gemäß einer optionalen als auch alternativen Ausgestaltung der erfindungsgemäßen Tragstruktur, verläuft das Verbindungselement in einer Ebene, die unter einem Winkel geneigt zu einer Ebene ausgerichtet ist, die sich entlang der Mittenachse eines damit verbundenen bogenförmigen Strebenabschnitts aufspannt. Bevorzugt ist jede der bogenförmigen Strebenabschnitte im Wesentlichen verdreht zur Ebene des plattenförmigen Verbindungselementes angeordnet. Ein solcher Kraftübertragungs-Knotenpunkt ist zwischen zwei Stützstreben der Tragstruktur ausgebildet, deren Mittenachsen in Ebenen verlaufen, die in einem Winkel geneigt zueinander ausgerichtet sind. Ein solcher Kraftübertragungs-Knotenpunkt wird auch als "Snake-K-Node" bezeichnet. Bevorzugt sind zwei Stützstreben der Tragstruktur, deren Längsachsen in unterschiedlichen Ebenen geneigt zueinander verlaufen, über mehrere, bevorzugt wenigstens zwei, bevorzugt drei oder mehr solcher Kraftübertragungs-Knotenpunkte miteinander verbunden. Die Anzahl der Knoten richtet sich insbesondere nach der Gesamthöhe der auszubildenden Tragstruktur, wobei die Anzahl der "Snake-K-Nodes" über die Gesamthöhe der Tragstruktur eins weniger ist als die Anzahl der "Snake-X-Nodes".

Gemäß einer bevorzugten Ausgestaltung der erfindungsgemäßen Tragstruktur sind eine, mehrere oder sämtliche Stützstreben der Tragstruktur mittels mehrerer plattenförmiger Verbindungselemente an den konvex gebogenen Außenflächen ihrer bogenförmigen Strebenabschnitte mit jeweils zwei unmittelbar benachbart angeordneten Stützstreben verbunden. In einer bevorzugten Ausführung ist somit jede sich vom ersten unteren Ende bis zum zweiten oberen Ende erstreckende Stützstrebe entlang einer Längsseite mit einer ebenfalls durchgängigen Stützstrebe verbunden, wobei deren Mittenachsen in einer gemeinsamen Ebene verlaufen. Vorzugsweise ist die gegenüberliegende Längsseite ebenfalls mit einer durchgängigen Stützstrebe mit bogenförmigen Strebenabschnitten verbunden, wobei die Mittenachsen in unterschiedlichen Ebenen geneigt zueinander verlaufen. Entlang der Erstreckungsrichtung der durchgängigen Stützstrebe ist jeweils wechselseitig ein sogenannter "Snake-X-Node" und ein "Snake-K-Node" vorgesehen. Gleiche Kraftübertragungs-Knotenpunkte sind entlang einer Längsseite der jeweiligen Stützstrebe angeordnet.

Gemäß einer bevorzugten Ausführungsform sind die Stützstreben als Rohre ausgebildet, wodurch eine bevorzugte Grundfestigkeit durch den zylindrischen Querschnitt der Stützstreben bewirkt ist.

In einer bevorzugten Weiterbildung der erfindungsgemäßen Tragstruktur sind die bogenförmigen Strebenabschnitte mittels wenigstens zwei zumindest bereichsweise einander überlappenden plattenförmigen Verbindungselementen miteinander verbunden, wobei beide Verbindungselemente bevorzugt auch untereinander verbunden sind. Als Verbindung zwischen den bogenförmigen Strebenabschnitten werden, anstelle nur einer einzigen Verbindungsplatte, zwei oder mehr Verbindungsbleche eingesetzt, die jeweils einzeln an ihren Verbindungsbereichen mit bevorzugt den konvex gebogenen Außenflächen der gekrümmten Strebenabschnitte gekoppelt sind. In einer Ausführung sind die plattenförmigen Verbindungselemente zur Ausbildung eines Kraftübertragungs-Knotenpunktes deckungsgleich zueinander angeordnet und formidentisch ausgebildet.

Gemäß einer bevorzugten Weiterbildung, ist jedes der beiden Verbindungselemente jeweils endseitig nur mit einer der Strebenabschnitte der Stützstreben verbunden und weist einen sich zwischen seinen Verbindungsenden erstreckenden Kopplungsabschnitt für eine Kopplung mit dem jeweils anderen Verbindungselement auf, der selbst nicht mit den bogenförmigen Strebenabschnitten gekoppelt ist. Das Verbindungselement ist ähnlich einem streifenförmigen Verbindungsblech mit einem mittleren Kopplungsabschnitt und endseitigen Verbindungsenden ausgebildet. Die Verbindungsenden verlaufen bevorzugt unter einem Winkel geneigt zum Kopplungsabschnitt. Die Verbindungselemente sind spiegelsymmetrisch angeordnet, sodass diese sich nur im Bereich ihres Kopplungsabschnittes decken. Die Verbindungselemente sind über den Kopplungsabschnitt untereinander verbunden, insbesondere verschraubt oder vernietet. Eine derartige Verbindung zwischen den Verbindungselementen ist wesentlich, um die notwendige Festigkeit, bzw. Steifigkeit innerhalb des erfindungsgemäßen Kraftübertragungs-Knotens zu bewirken.

Vorzugsweise ist jedes Verbindungselement mit einem Ende mit einem bogenförmigen Strebenabschnitt der einen Stützstrebe und mit dem entgegengesetzten Ende mit einem bogenförmigen Strebenabschnitt der anderen Stützstrebe im Betrieb auf unterschiedlichen Höhen verbunden. Damit ist eine optimierte Krafteinleitung in und aus einem solchen erfindungsgemäßen Kraftübertragungs-Knotenpunkt erreicht und sich nachteilig auswirkende Spannungen in den Befestigungsabschnitten zwischen den Strebenabschnitten und den Verbindungselementen werden vermieden. Bevorzugt ist jeder gekrümmte Strebenabschnitt an seiner Außenseite, in dem Bereich in dem dieser den geringsten Abstand zum benachbart angeordneten entgegengesetzt gekrümmten Strebenabschnitt aufweist, nicht mit dem Verbindungselement gekoppelt.

Gemäß einer bevorzugten Ausführungsform der erfindungsgemäßen Tragstruktur ist mindestens ein zusätzliches Versteifungselement als Verbindung zwischen zwei sich durchgängig vom unteren zum oberen Ende erstreckenden Stützstreben vorgesehen. Die Versteifungselemente haben insbesondere die Aufgabe, ein Ausknicken der Stützstreben im Bereich eines benachbart angeordneten Kraftübertragungs-Verbindungsknotens zu verhindern. Mittels des Versteifungselements werden bevorzugt die konkav gebogenen Außenflächen der bogenförmigen Strebenabschnitte zweier Stützstreben miteinander verbunden. Insbesondere werden die konkaven Außenflächen der bogenförmigen Strebenabschnitte der Stützstreben miteinander verbunden, deren Mittenachsen in einer gemeinsamen Ebene verlaufen. Somit ist ein solches Versteifungselement im Betrieb unmittelbar neben einem Kraftübertragungs-Verbindungsknoten angeordnet, in dem die Mittenachsen der beiden miteinander verbundenen Stützstreben in zwei Ebenen geneigt zueinander verlaufen. Bezogen auf die Höhenrichtung der Tragstruktur, ist das Versteifungselement insbesondere zwischen zwei auf unterschiedlichen Höhen angeordneten Kraftübertragungs-Verbindungsknoten angeordnet. Auf das Versteifungselement wirkt vornehmlich eine Zugkraft in Längsrichtung des Versteifungselementes.

In einer Weiterbildung der erfindungsgemäßen Tragstruktur sind mehrere horizontal verlaufende Versteifungselemente auf gleicher Höhe angeordnet, wobei die Versteifungselemente bevorzugt einen umlaufenden, im Betrieb im Wesentlichen horizontal angeordneten Versteifungsring ausbilden. Damit wird die Festigkeit, bzw. Steifigkeit der erfindungsgemäßen Tragstruktur weiter verbessert und ein Ausknicken der vom ersten unteren Ende bis zum zweiten oberen Ende durchgängig verlaufenden Stützstreben vermieden. Bevorzugt sind die Versteifungselemente als gerade Rohrabschnitte ausgebildet, sodass ein jeweils aus mehreren Rohrabschnitten gebildeter Versteifungsring eine polygonale Außenform aufweist. Vorliegend sind bevorzugt sechs Versteifungselemente an der Tragstruktur angeordnet, mit denen ein umlaufender Versteifungsring mit einer hexagonalen Außenkontur ausgebildet ist. Zwischen zwei Versteifungselementen ist jeweils ein Kraftübertragungs-Verbindungsknoten angeordnet.

Vorzugsweise sind mehrere Versteifungsringe auf unterschiedlichen Ebenen in der Höhe der Tragstruktur angeordnet. Bevorzugt sind zwei oder mehr solcher Versteifungsringe auf unterschiedlichen Ebenen verteilt über die Höhe der erfindungsgemäßen Tragstruktur angeordnet.

Gemäß einer bevorzugten Weiterbildung der Tragstruktur ist jede Stützstrebe aus mehreren geraden und bogenförmig gekrümmten Strebenabschnitten gebildet, wobei bevorzugt zwischen zwei bogenförmig gekrümmten Strebenabschnitten wenigstens ein gerader Strebenabschnitt angeordnet ist. Die sich vom ersten unteren zum zweiten oberen Ende erstreckenden Stützstreben weisen jeweils eine Vielzahl gerader und bogenförmig gekrümmter Strebenabschnitte auf, wobei die unterschiedlich geformten Strebenabschnitte in Erstreckungsrichtung der Stützstrebe abwechselnd angeordnet sind. Zudem weisen auch die bogenförmigen Strebenabschnitte entlang der Stützstrebe jeweils abwechselnd unterschiedliche Krümmungsrichtungen auf. Die bogenförmig gekrümmten Strebenabschnitte erstrecken sich somit abwechselnd in entgegengesetzte Richtungen.

Bevorzugt sind die bogenförmig gekrümmten Strebenabschnitte einer Stützstrebe, auch wenn diese in entgegengesetzte Richtungen gekrümmt sind, im Wesentlichen identisch ausgebildet. Entlang einer Stützstrebe variiert insbesondere die Länge der geraden Strebenabschnitte, welche vom ersten unteren Ende in Richtung des zweiten oberen Endes geringer wird.

Vorzugsweise weisen die Stützstreben an ihren oberen Enden gerade Strebenabschnitte auf, die unter einem Winkel geneigt zur Vertikalen verlaufen und zum Aufnehmen eines Kraftübertragungs-Moduls am oberen Ende der Tragstruktur eingerichtet sind. Bevorzugt verlaufen die geraden Strebenabschnitte in radialer und axialer Richtung so aufeinander zu, dass die Mittenachsen der geraden Strebenabschnitte sich in einem gemeinsamen Zentralpunkt treffen. Die geraden Strebenabschnitte sind ebenfalls bevorzugt Rohrabschnitte, über die hülsenförmige Kopplungsabschnitte eines Kraftübertragungs-Modules geschoben werden. Ein solches Kraftübertragungs-Modul weist bevorzugt mindestens einen im Betrieb im Wesentlichen sich horizontal erstreckenden ringförmigen Plattenkörper auf. An dem Plattenkörper ist entsprechend der Anzahl der am oberen Ende der Tragstruktur angeordneten geraden Strebenabschnitte eine korrespondierende Anzahl an Kopplungsabschnitte zur Kopplung des Kraftübertragungs-Moduls mit der Tragstruktur vorgesehen ist. Ferner ist an dem ringförmigen Plattenkörper des Kraftübertragungs-Modules ein Transition-Piece-Rohr angeordnet, das zur Aufnahme des unteren Endes eines Turms einer Windenergieanlage eingerichtet ist. Das untere Ende des Transition-Piece-Rohres endet im Betrieb bevorzugt auf gleicher Höhe mit den Enden der Vielzahl an Verbindungssegmenten. Das obere Ende des Transition-Piece-Rohres erstreckt sich über die Oberseite des Plattenkörpers hinaus. Zudem ist am unteren Ende des Kraftübertragungs-Modules ein zweiter Plattenkörper vorgesehen, der die freien Enden der Verbindungssegmente untereinander und mit dem unteren Ende des Transition-Piece-Rohres verbindet.

Gemäß einer bevorzugten Ausführungsform der vorliegenden Erfindung sind die unteren Enden der Stützstreben mit einer Adaptervorrichtung verbindbar, welche mehrere mit einem im Untergrund verankerten Fundament, insbesondere mit Rammpfählen, koppelbare Adapterstäbe aufweist, welche im Betrieb im Wesentlichen parallel zur Vertikalen verlaufen; anstelle von Rammpfählen könnten auch andere Gründungen eingesetzt werden, beispielsweise Bohrpfähle, Suction Buckets oder sonstige Arten der Anbindung an den Meeresboden. An den unteren Enden der Stützstreben sind Fußelemente vorgesehen, welche einen bevorzugt in vertikaler Richtung verlaufenden Befestigungsabschnitt aufweisen, der mit den oberen Enden der Adapterstäbe der Adaptervorrichtung koppelbar ist. In einer Ausführung werden unmittelbar einander benachbarte Fußelemente sind über im Wesentlichen horizontal verlaufende Kopplungsstreben miteinander verbunden.

Die Erfindung betrifft in einem weiteren Aspekt eine Gründungsstruktur für On- und/oder Offshore-Windenergieanlagen mit einer Tragstruktur nach einer der vorstehend beschriebenen bevorzugten Ausführungsformen, einem am oberen Ende der Tragstruktur angeordneten Kraftübertragungs-Modul und, vorzugsweise einer mit dem unteren Ende der erfindungsgemäßen Tragstruktur gekoppelten Adaptervorrichtung zum Ausgleichen von Höhenunterschieden des Untergrunds zu einer Referenzebene an verschiedenen Aufstellorten. Mithilfe einer derartig erfindungsgemäßen Gründungsstruktur ist im Betrieb eine verbesserte Kraftübertragung vom Übertragungsmodul, an dem die Windenergieanlage mit ihrem Turm aufgenommen ist, in Richtung eines das erste untere Ende der Tragstruktur aufnehmenden Fundamentes erreicht. In einer Ausführungsform wird das untere Ende der Tragstruktur unmittelbar mit einem im Untergrund verankerten Fundament verbunden. Eine weitere Ausführung sieht eine mit dem unteren Ende der Tragstruktur koppelbare Adaptervorrichtung als Kopplungsglied zu dem im Gewässergrund verankerten Fundament vor. Mit der Adaptervorrichtung können bei der Montage einer Windenergieanlage im Offshore-Bereich variierende Höhenunterschiede zwischen der Gewässeroberfläche und dem Untergrund an verschiedenen Aufstellungsorten ausgeglichen werden, ohne die Tragstruktur selbst anpassen zu müssen. Als Fundament werden vorzugsweise mehrere in den Gewässergrund einzutreibende Rammpfähle, Bohrpfählen, Suction Buckets oder sonstigen Arten der Anbindung an den Meeresboden, verwendet.

Die zur erfindungsgemäßen Tragstruktur beschriebenen, bevorzugten Ausführungsformen, bzw. Weiterbildungen, sind zugleich auch bevorzugte Ausführungsformen der erfindungsgemäßen Gründungsstruktur. Zur Gründungsstruktur beschriebene bevorzugte Ausführungsformen, welche sich auf die Tragstruktur beziehen, sind zugleich bevorzugte Ausführungsformen der Tragstruktur.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Vorderansicht einer Gründungsstruktur mit einer Tragstruktur gemäß der vorliegenden Erfindung;
- Fig. 2:: eine Detailansicht der erfindungsgemäßen Tragstruktur und der zwischen zwei Stützstreben ausgebildeten Kraftübertragungs-Knotenpunkte;
- Fig. 3, 4:: Ansichten einer ersten Ausführungsform eines erfindungsgemäßen Kraftübertragungs-Knotenpunktes;
- Fig. 5, 6:: Ansichten einer zweiten Ausführungsform eines erfindungsgemäßen Kraftübertragungs-Knotenpunktes; und
- Fig. 7, 8:: eine weitere alternative Ausführungsform eines erfindungsgemäßen Kraftübertragungs-Knotenpunktes.

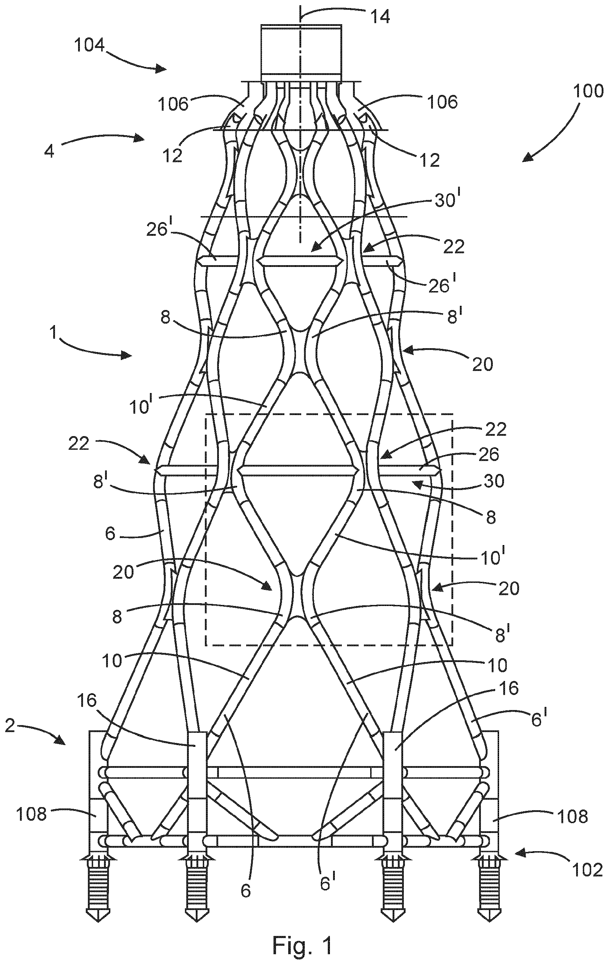

Fig. 1 zeigt eine Gründungsstruktur 100, welche eine Tragstruktur 1, ähnlich einer Jacket-Konstruktion, eine Adaptervorrichtung 102, welche am ersten, im Betrieb unteren Ende der Tragstruktur 1 angeordnet ist, und ein Kraftübertragungs-Modul 104 umfasst, welches am zweiten, im Betrieb oberen Ende der Tragstruktur 1 befestigt ist. Die Adaptervorrichtung 102 ist mit einem nicht näher gezeigten Fundament, insbesondere mit Aufnahmen an den oberen Enden von in dem Gewässergrund verankerten mehreren Rammpfählen, Bohrpfählen, Suction Buckets oder sonstigen Arten der Anbindung an den Meeresboden, gekoppelt.

Die Tragstruktur 1 weist mehrere Stützstreben 6, 6' auf, welches sich vom ersten unteren Ende 2 zum oberen Ende 4 der Tragstruktur erstrecken und im Betrieb unter einem Winkel gegenüber einer Vertikalen geneigt sind. Jede Stützstrebe 6, 6' ist aus mehreren bogenförmig gekrümmten Strebenabschnitten 8, 8' und mehreren geraden Strebenabschnitten 10, 10' gebildet. Zwischen zwei bogenförmig gekrümmten Strebenabschnitten 8, 8' ist jeweils wenigstens ein gerader Strebenabschnitt 10, 10' angeordnet. In der gezeigten Ausführungsform sind die bogenförmig gekrümmten Strebenabschnitte einer Stützstrebe 6, 6' abwechselnd im Wesentlichen in entgegengesetzte Richtungen gekrümmt. Jede Stützstrebe weist demnach in Erstreckungsrichtung zuerst einen rechtsgekrümmten Strebenabschnitt 8 und dann einen linksgekrümmten Strebenabschnitt 8` oder zuerst einen linksgekrümmten Strebenabschnitt 8`und dann einen rechtsgekrümmten Strebenabschnitt 8 auf. Jede Stützstrebe 6, 6' weist zudem an ihrem zweiten, oberen Ende einen geraden Strebenabschnitt 12 auf, der zum Aufnehmen des Kraftübertragungs-Modules 104 am oberen Ende 4 der Tragstruktur 1 eingerichtet ist. Die geraden Strebenabschnitte 12 verlaufen in einem Winkel geneigt zu einer Zentralachse 14 der Tragstruktur 1, wobei die Mittenachsen sämtlicher gerader Strebenabschnitte 12 sich in einem Punkt auf einer Zentralachse 14 schneiden. Die Strebenabschnitte 12 korrespondieren mit hülsenförmigen Kopplungsteilen 106 des Kraftübertragungs-Modules 104.

Wie aus Fig. 1 weiter ersichtlich, sind am unteren Ende 2 der Tragstruktur 1 der Stützstreben Fußelemente 16 vorgesehen, welche einen in vertikaler Richtung verlaufenden, nicht näher gezeigten Befestigungsabschnitt aufweisen. Der Befestigungsabschnitt eines jeweiligen Fußelementes 16 wird, wie in der vorliegenden Ausführungsform gezeigt, mit einem oberen Ende eines Adapterstabes 108 der Adaptervorrichtung 102 befestigt oder direkt mit einem oberen Ende eines nicht näher gezeigten Fundaments gekoppelt. Wie vorliegend ausgeführt, sind jeweils zwei Stützstreben 6,6' an ihrem unteren Ende mit einem Fußelement 16 verbunden.

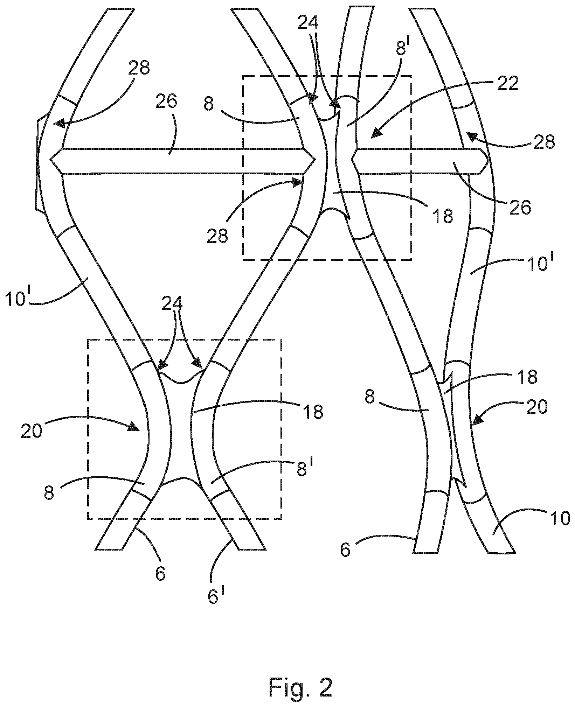

Fig. 2 zeigt das Detail A aus Fig.1 und zwei benachbart zueinander angeordnete Stützstreben 6, 6' im Bereich ihrer gekrümmten Strebenabschnitte 8, 8' mittels wenigstens eines plattenförmigen Verbindungselementes 18 miteinander verbunden und bilden einen erfindungsgemäßen Kraftübertragungs-Knotenpunkt 20 aus. In einem solchen erfindungsgemäßen Kraftübertragungs-Knotenpunkt 20 verlaufen die miteinander verbundenen Strebenabschnitte 8, 8' entgegengesetzt gekrümmt. Ein Strebenabschnitt 8 weist im Knotenpunkt 20 eine Linkskrümmung und der andere Strebenabschnitt 8'eine Rechtskrümmung auf. Im Abstand oberhalb des Kraftübertragungs-Knotenpunkt 20 ist ein weiterer Kraftübertragungs-Knotenpunkt 22 mit gekrümmten Strebenabschnitten 8, 8`ausgebildet.

Wie ferner aus Fig. 2 ersichtlich, sind die Strebenabschnitte 8, 8' in jedem Kraftübertragungs-Knotenpunkt 20, 22 jeweils über ihre konvex gebogenen Außenflächen 24 miteinander verbunden. Mehrere miteinander verbundene bogenförmige Strebenabschnitte 8, 8`, welche bevorzugt identische Kraftübertragungs-Knotenpunkte 20 bzw. 22 ausbilden, sind im Betrieb im Wesentlichen auf gleicher Höhe der Tragstruktur 1 angeordnet. Wie in Verbindung mit Fig. 1 ferner ersichtlich, sind sämtliche Stützstreben 6, 6' der Tragstruktur 1 entlang jeweils ihrer Erstreckungsrichtung mittels mehrerer plattenförmiger Verbindungselemente 18 mit jeweils zwei unmittelbar benachbart angeordneter Stützstreben 6', 6 in über die Kraftübertragungs-Knotenpunkte 20, 22 verbunden. Jede sich vom ersten bis zum zweiten Ende 2, 4 erstreckende Stützstrebe 6, 6' ist mit einer benachbarten Stützstrebe jeweils über nur eine Art der Ausgestaltung eines Kraftübertragungs-Knotenpunktes 20 oder 22 verbunden.

Wie aus den Figuren 1 und 2 ferner ersichtlich, ist zwischen zwei Stützstreben 6, 6' ein zusätzliches Versteifungselement 26 als Verbindung vorgesehen, welches die konkav gebogenen Außenflächen 28 der bogenförmigen Strebenabschnitte 8, 8` der Stützstreben miteinander verbindet. Ein solches Versteifungselement 26, welches als Versteifungsstrebe ausgebildet ist, ist nur auf Höhe der Kraftübertragungs-Verbindungsknoten 22 vorgesehen. Wie Fig. 1 ferner zeigt, sind mehrere horizontal verlaufende Versteifungselemente 26, 26' auf gleicher Höhe angeordnet, wobei die Versteifungselemente einen im Betrieb umlaufenden, im Wesentlichen horizontal angeordneten Versteifungsring 30, 30' ausbilden. Mehrere Versteifungsringe 30, 30' sind auf unterschiedlichen Ebenen der Tragstruktur 1 vorgesehen, aber stets nur auf Höhe der Verbindungsknoten 22' vorgesehen.

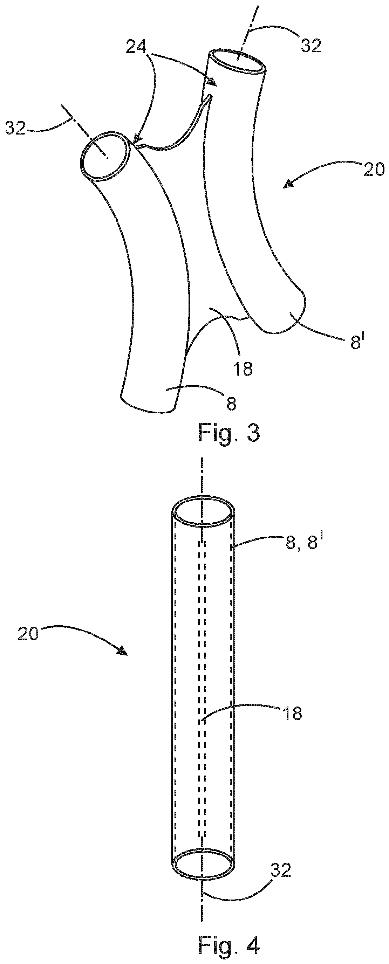

Die Figuren 3 und 4 zeigen einen Kraftübertragungs-Knotenpunkt 20, dessen Verbindungselement 18 sich im Wesentlichen in Strebenrichtung der Stützstreben 6, 6' erstreckt. In der vorliegenden Ausführungsform verläuft das Verbindungselement 18 parallel, insbesondere deckungsgleich zu einer durch die Mittenachse 32 der bogenförmigen Strebenabschnitte 8, 8' verlaufenden Ebene. Das Verbindungselement 18 ist vorliegend als einteiliger Plattenkörper ausgebildet, der, wie gezeigt, vollständig entlang seiner Längsseiten mit einer entsprechend konvex gebogenen Außenfläche 24 der Strebenabschnitte 8, 8' verbunden ist, insbesondere verschweißt. Das Verbindungselement 18 erstreckt sich bevorzugt über mindestens die Hälfte, bevorzugt über mehr als Dreiviertel entlang der konvex gebogenen Außenfläche 24 eines mit dem Verbindungselementes 18 verbundenen gekrümmten Strebenabschnittes 8, 8`. An die Enden eines jeweils bogenförmigen Strebenabschnittes 8, 8' schließt sich unmittelbar ein gerader Strebenabschnitt 10, 10' an (siehe Fig. 2).

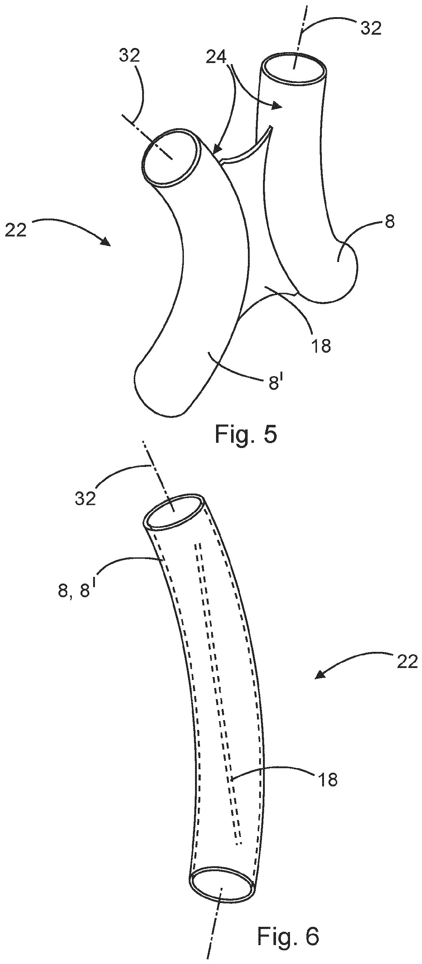

In den Figuren 5 und 6 ist eine Ausführungsform eines erfindungsgemäßen Kraftübertragungs-Knotenpunktes 22 gezeigt, dessen gekrümmte Strebenabschnitte 8`, entgegen der in den Figuren 3 und 4 gezeigten Ausführungsformen verdreht zueinander und zu dem Verbindungselement 18 im Knotenpunkt 22 verlaufen. Das Verbindungselement 20 verläuft somit unter einem Winkel geneigt zu einer Ebene, die sich entlang der Mittenachse 32 eines damit verbundenen bogenförmigen Strebenabschnittes 8, 8' aufspannt. Der Neigungswinkel zwischen dem Verbindungselement und der sich entlang der Längsachse eines Strebenabschnittes 8, 8' aufspannenden Ebene ist etwa halb so groß, wie der Winkel zwischen den Ebenen, die sich entlang der Mittenachsen 32 zweier in den Knotenpunkten 22 untereinander verbundener gekrümmter Strebenabschnitte 8, 8' erstrecken.

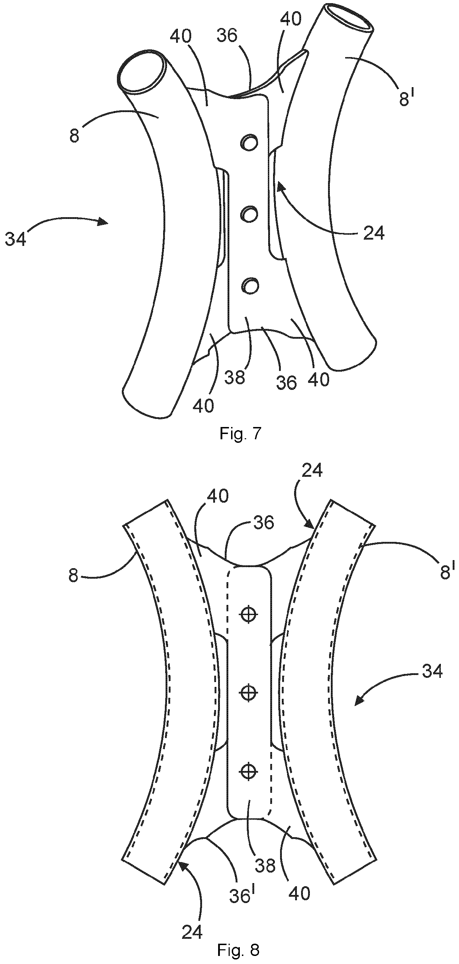

Die Figuren 7 und 8 zeigen eine alternative Ausführungsform eines Kraftübertragungs-Verbindungsknotens 34, der statt einem einzigen Verbindungselement nunmehr zwei zumindest bereichsweise einander überlappende Verbindungselemente 36, 36' aufweist. In der gezeigten Ausführungsform weisen die einander überlappenden Verbindungselemente 36, 36' einen Kopplungsabschnitt 38 auf, die untereinander mittels Nieten oder Bolzen verbunden sind. Der Kopplungsabschnitt 38 verläuft im Betrieb etwa senkrecht zwischen den miteinander zu verbindenden gekrümmten Strebenabschnitten 8, 8`. Die Verbindungselemente 36, 36' sind mit ihren entgegengesetzten Enden mit den Außenflächen 24 der bogenförmig gekrümmten Strebenabschnitt 8, 8' unterschiedlicher Stützstreben 6, 6' verbunden. Die an entgegengesetzten Ende des Kopplungsabschittes 38 angeordneten Verbindungsenden 40 des Verbindungselementes 36, 36' verlaufen in einer ersten Ebene parallel zum Kopplungsabschnitt 38 und in einer zweiten Ebene, welche senkrecht zur ersten verläuft, in einem Winkel geneigt zur Erstreckungsrichtung der Kopplungsabschnitte 38.

Die vier Verbindungsenden 40 der zwei Verbindungselemente 36, 36' weisen einen verringerten Verbindungsbereich zu den gekrümmten Strebenabschnitte 8, 8` der Stützstreben 6 in dem Kraftübertragungs-Verbindungsknoten 34 auf. Im Gegensatz zu den Knotenpunkten 20, 22 weist der Knotenpunkt 34 einen unverbundenen Mittenbereich zwischen den Strebenabschnitte 8, 8' und den Verbindungselementen 36, 36' in dem der geringste Abschnitt zwischen den benachbart angeordneten, entgegengesetzt gekrümmten Strebenabschnitten 8, 8' vorhanden ist.

### Bezugszeichenliste

- 1: Tragstruktur
- 2: erstes Ende
- 4: zweites Ende
- 6, 6': Stützstrebe
- 8, 8`: Strebenabschnitt
- 10, 10`: Strebenabschnitt
- 12: Strebenabschnitt
- 14: Zentralachse
- 16: Fußelement
- 18: Verbindungselement
- 20, 22: Kraftübertragungs-Knotenpunkt
- 24,28: Außenfläche
- 26: Versteifungselement
- 30, 30': Versteifungsring
- 32: Mittenachse
- 34: Kraftübertragungs-Knotenpunkt
- 36, 36`: Verbindungselement
- 38: Kopplungsabschnit
- 40: Verbindungsende
- 100: Gründungsstruktur
- 102: Adaptervorrichtung
- 104: Kraftübertragungs-Modul
- 106: Kopplungsteilen
- 108: Adapterstab

## Patentansprüche

1. Tragstruktur (1) insbesondere für On- und/oder Offshore-Windenergieanlagen, mit einem ersten im Betrieb unteren Ende (2), welches einem die Tragstruktur aufnehmenden Untergrund zugewandt ist, und einem dem ersten Ende gegenüberliegend angeordneten zweiten oberen Ende (4), und mehreren sich im Wesentlichen vom unteren zum oberen Ende der Tragstruktur erstreckenden und im Betrieb unter einem Winkel gegenüber einer Vertikalen geneigten Stützstreben (6, 6'), wobei die Stützstreben (6, 6`) mehrere bogenförmige, gekrümmte Strebenabschnitte (8, 8') aufweisen, und zwei benachbart zueinander angeordnete Stützstreben (6, 6') im Bereich ihrer gekrümmten Strebenabschnitte (8, 8') mittels wenigstens eines plattenförmigen Verbindungselementes (18, 36, 36`) miteinander verbunden sind, **dadurch gekennzeichnet, dass** die mehreren Stützstreben (6, 6') sich durchgängig vom unteren Ende (2) zum oberen Ende (4) der Tragstruktur (1) erstrecken.

2. Tragstruktur nach Anspruch 1, **dadurch gekennzeichnet, dass** die miteinander verbundenen Strebenabschnitten (8, 8') entgegengesetzt gekrümmt verlaufen und im Bereich ihrer Außenseiten miteinander verbunden sind.

3. Tragstruktur nach einem der Ansprüche 1 und 2, **dadurch gekennzeichnet, dass** die Strebenabschnitte (8, 8') jeweils über ihre in Strebenrichtung konvex gebogenen Außenflächen (24) miteinander verbunden sind.

4. Tragstruktur nach einem der vorstehenden Ansprüche, **dadurch gekennzeichnet, dass** das Verbindungselement (18, 36, 36`) sich im Wesentlichen in Strebenrichtung der Stützstreben (6, 6') erstreckt, bevorzugt parallel zur Mittenachse (32) der damit verbundenen bogenförmigen Strebenabschnitte (8, 8') verläuft.

5. Tragstruktur nach einem der vorstehenden Ansprüche, **dadurch gekennzeichnet, dass** das Verbindungselement (18, 36, 36') in einer Ebene verläuft, die unter einem Winkel geneigt zu einer Ebene ausgerichtet ist, die sich entlang der Mittenachse (32) eines damit verbundenen bogenförmigen Strebenabschnittes (8, 8') aufspannt.

6. Tragstruktur nach einem der vorstehenden Ansprüche, **dadurch gekennzeichnet, dass** eine, mehrere oder sämtlichen Stützstreben (6, 6') der Tragstruktur mittels mehrerer plattenförmiger Verbindungselementes (18, 36, 36`) an den konvex gebogenen Außenflächen (24) ihrer bogenförmigen Strebenabschnitte (8, 8') mit zwei jeweils benachbart angeordneten Stützstreben (6, 6') verbunden sind, und dass die Stützstreben (6, 6`) als Rohre ausgebildet sind.

7. Tragstruktur nach einem der vorstehenden Ansprüche, **dadurch gekennzeichnet, dass** die bogenförmigen Strebenabschnitte (8, 8') mittels wenigstens zwei zumindest bereichsweise einander überlappender plattenförmiger Verbindungselemente (36, 36') miteinander verbunden sind, wobei beide Verbindungselemente (36, 36`) untereinander verbunden sind.

8. Tragstruktur nach Anspruch 7, wobei jedes der beiden Verbindungselemente (36, 36`) jeweils endseitig nur mit einer der Strebenabschnitte (8, 8') der Stützstreben (6, 6`) verbunden ist und einen sich zwischen seinen Verbindungsenden (40) erstreckenden Kopplungsabschnitt (38) für das jeweils andere Verbindungselement (36, 36') aufweist

9. Tragstruktur nach Anspruch 8, **dadurch gekennzeichnet, dass** jedes Verbindungselement (36, 36`) mit einem Ende mit einem bogenförmigen Strebenabschnitt (8) der einen Stützstrebe (6) und mit dem entgegengesetzten Ende mit einem bogenförmigen Strebenabschnitt (8') der anderen Stützstrebe (6') verbunden ist.

10. Tragstruktur nach einem der vorstehenden Ansprüche, wobei mindestens ein zusätzliches Versteifungselement (26, 26`) als Verbindung zwischen zwei Stützstreben (6, 6') vorgesehen ist, wobei mittels des Versteifungselements (26, 26`) die konkav gebogenen Außenflächen (24) der bogenförmigen Strebenabschnitte (8, 8`) zweier Stützstreben (6, 6') miteinander verbunden sind.

11. Tragstruktur nach einem der vorstehenden Ansprüche, **dadurch gekennzeichnet, dass** mehrere horizontal verlaufende Versteifungselemente (26, 26`) auf gleicher Höhe angeordnet sind, wobei bevorzugt die Versteifungselemente (26, 26`) einen umlaufenden, im Betrieb im Wesentlichen horizontal angeordneten Versteifungsring (30, 30`) ausbilden.

12. Tragstruktur nach einem der vorstehenden Ansprüche, **dadurch gekennzeichnet, dass** jede Stützstrebe (6, 6') aus mehreren geraden und mehreren bogenförmig gekrümmten Strebenabschnitten (8, 8`, 10, 10`) gebildet ist, wobei bevorzugt zwischen zwei bogenförmig gekrümmten Strebenabschnitten (8, 8') wenigstens ein gerader Strebenabschnitt (10, 10`) angeordnet ist.

13. Tragstruktur nach einem der vorstehenden Ansprüche, **dadurch gekennzeichnet, dass** die bogenförmig gekrümmten Strebenabschnitten (8, 8') einer Stützstrebe (6, 6') abwechselnd in im Wesentlichen entgegengesetzte Richtungen gekrümmt verlaufen.

14. Tragstruktur nach einem der vorstehenden Ansprüche, **dadurch gekennzeichnet, dass** die Stützstreben (6, 6') an ihren oberen Enden (4) gerade Strebenabschnitte (12) aufweisen, die unter einem Winkel geneigt zu einer Zentralachse (14) verlaufen und zum Aufnehmen eines Kraftübertragungsmoduls (104) am oberen Ende (4) der Tragstruktur eingerichtet sind.

15. Gründungstruktur (100) für On- und/oder Offshore-Windenergieanlagen mit
- einer Tragstruktur (1) nach einem der Ansprüche 1 und 14,
- einem am oberen Ende der Tragstruktur angeordneten Kraftübertragungs-Modul (104), und
- vorzugsweise einer mit dem unteren Ende der erfindungsgemäßen Tragstruktur gekoppelten Adaptervorrichtung (102) zum Ausgleichen von Höhenunterschieden.

## Claims

1. Load-bearing structure (1), in particular for onshore and/or offshore wind turbines, having a first end (2), which is the lower end in the in-use state and faces towards an underlying structure which receives the load-bearing structure, and a second, upper end (4), which is arranged situated opposite the first end, and multiple supporting struts (6, 6'), which extend substantially from the lower end to the upper end of the load-bearing structure and, in the in-use state, are inclined at an angle to a vertical, wherein the supporting struts (6, 6') have multiple arcuate curved strut portions (8, 8') and two supporting struts (6, 6') arranged adjacent to one another are connected to one another in the region of their curved strut portions (8, 8') by means of at least one plate-like connecting element (18, 36, 36'), **characterized in that** the multiple supporting struts (6, 6') extend continuously from the lower end (2) to the upper end (4) of the load-bearing structure (1).

2. Load-bearing structure according to Claim 1, **characterized in that** the strut portions (8, 8') connected to one another extend in an oppositely curved manner and are connected to one another in the region of their outer sides.

3. Load-bearing structure according to either of Claims 1 and 2, **characterized in that** the strut portions (8, 8') are connected to one another in each case via their outer surfaces (24) which are bent convexly in the strut direction.

4. Load-bearing structure according to one of the preceding claims, **characterized in that** the connecting element (18, 36, 36') extends substantially in the strut direction of the supporting struts (6, 6'), preferably extending parallel to the central axis (32) of the arcuate strut portions (8, 8') connected thereto.

5. Load-bearing structure according to one of the preceding claims, **characterized in that** the connecting element (18, 36, 36') extends in a plane which is oriented so as to be inclined at an angle to a plane which is spanned along the central axis (32) of an arcuate strut portion (8, 8') connected thereto.

6. Load-bearing structure according to one of the preceding claims, **characterized in that** one, multiple or all the supporting struts (6, 6') of the load-bearing structure are connected to two in each case adjacently arranged supporting struts (6, 6') by means of multiple plate-like connecting elements (18, 36, 36') at the convexly bent outer surfaces (24) of their arcuate strut portions (8, 8'), and **in that** the supporting struts (6, 6') are in the form of tubes.

7. Load-bearing structure according to one of the preceding claims, **characterized in that** the arcuate strut portions (8, 8') are connected to one another by means of at least two plate-like connecting elements (36, 36') which at least regionally overlap one another, wherein the two connecting elements (36, 36') are connected to one another.

8. Load-bearing structure according to Claim 7, wherein each of the two connecting elements (36, 36') is connected, in each case at an end, only to one of the strut portions (8, 8') of the supporting struts (6, 6') and has a coupling portion (38), extending between its connecting ends (40), for the in each case other connecting element (36, 36').

9. Load-bearing structure according to Claim 8, **characterized in that** each connecting element (36, 36') is connected at one end to an arcuate strut portion (8) of one supporting strut (6) and at the opposite end to an arcuate strut portion (8') of the other supporting strut (6').

10. Load-bearing structure according to one of the preceding claims, wherein at least one additional stiffening element (26, 26') is provided as a connection between two supporting struts (6, 6'), wherein, by means of the stiffening element (26, 26'), the concavely bent outer surfaces (24) of the arcuate strut portions (8, 8') of two supporting struts (6, 6') are connected to one another.

11. Load-bearing structure according to one of the preceding claims, **characterized in that** multiple horizontally extending stiffening elements (26, 26') are arranged at the same height, wherein preferably the stiffening elements (26, 26') form an encircling stiffening ring (30, 30') which, in the in-use state, is arranged substantially horizontally.

12. Load-bearing structure according to one of the preceding claims, **characterized in that** each supporting strut (6, 6') is formed from multiple straight and multiple arcuately curved strut portions (8, 8', 10, 10'), wherein preferably at least one straight strut portion (10, 10') is arranged between two arcuately curved strut portions (8, 8').

13. Load-bearing structure according to one of the preceding claims, **characterized in that** the arcuately curved strut portions (8, 8') of a supporting strut (6, 6') extend so as to be curved alternately in substantially opposite directions.

14. Load-bearing structure according to one of the preceding claims, **characterized in that**, at their upper ends (4), the supporting struts (6, 6') have straight strut portions (12) which extend so as to be inclined at an angle to a central axis (14) and which are configured for receiving a force-transmission module (104) at the upper end (4) of the load-bearing structure.

15. Foundation structure (100) for onshore and/or offshore wind turbines, having
- a load-bearing structure (1) according to either of Claims 1 and 14,
- a force-transmission module (104) arranged on the upper end of the load-bearing structure, and
- preferably an adaptor device (102) which is coupled to the lower end of the load-bearing structure according to the invention and serves for compensating for differences in height.

## Revendications

1. Structure de support (1) en particulier pour éoliennes en mer et/ou sur terre, comportant une première extrémité (2) inférieure lors du fonctionnement, laquelle est tournée vers une base recevant la structure de support, et une deuxième extrémité supérieure (4) disposée de manière opposée à la première extrémité, et plusieurs entretoises de support (6, 6') s'étendant sensiblement de l'extrémité inférieure à l'extrémité supérieure de la structure de support et inclinées suivant un angle par rapport à une verticale lors du fonctionnement, les entretoises de support (6, 6') présentant plusieurs parties d'entretoises (8, 8') arquées, incurvées, et deux entretoises de support (6, 6') disposées de manière adjacente l'une à l'autre étant reliées l'une à l'autre dans la région de leur parties d'entretoises incurvées (8, 8') au moyen d'au moins un élément de liaison (18, 36, 36') en forme de plaque, **caractérisée en ce que** les plusieurs entretoises de support (6, 6') s'étendent de manière continue de l'extrémité inférieure (2) à l'extrémité supérieure (4) de la structure de support (1).

2. Structure de support selon la revendication 1, **caractérisée en ce que** les parties d'entretoises (8, 8') reliées les unes aux autres s'étendent de manière incurvée en sens inverse et sont reliées les unes aux autres dans la région de leurs côtés extérieurs.

3. Structure de support selon l'une des revendications 1 et 2, **caractérisée en ce que** les parties d'entretoises (8, 8') sont reliées les unes aux autres respectivement par le biais de leurs surfaces extérieures (24) courbées de manière convexe dans la direction d'entretoise.

4. Structure de support selon l'une des revendications précédentes, **caractérisée en ce que** l'élément de liaison (18, 36, 36') s'étend sensiblement dans la direction d'entretoise des entretoises de support (6, 6'), de préférence s'étend parallèlement à l'axe médian (32) des parties d'entretoises (8, 8') arquées reliées à celui-ci.

5. Structure de support selon l'une des revendications précédentes, **caractérisée en ce que** l'élément de liaison (18, 36, 36') s'étend dans un plan qui est orienté de manière inclinée suivant un angle par rapport à un plan qui s'étend le long de l'axe médian (32) d'une partie d'entretoise (8, 8') arquée reliée à celui-ci.

6. Structure de support selon l'une des revendications précédentes, **caractérisée en ce qu'**une, plusieurs ou toutes les entretoises de support (6, 6') de la structure de support sont reliées à deux entretoises de support (6, 6') respectivement disposées de manière adjacente au moyen de plusieurs éléments de liaison (18, 36, 36') en forme de plaques au niveau des surfaces extérieures (24) courbées de manière convexe de leur parties d'entretoises (8, 8') arquées et **en ce que** les entretoises de support (6, 6') sont réalisées sous forme de tubes.

7. Structure de support selon l'une des revendications précédentes, **caractérisée en ce que** les parties d'entretoises (8, 8') arquées sont reliées les unes aux autres au moyen d'au moins deux éléments de liaison (36, 36') en forme de plaques se chevauchant les uns les autres au moins dans certaines régions, les deux éléments de liaison (36, 36') étant reliés l'un à l'autre.

8. Structure de support selon la revendication 7, chacun des deux éléments de liaison (36, 36') étant relié respectivement côté extrémité seulement à l'une des parties d'entretoises (8, 8') des entretoises de support (6, 6') et présentant une partie d'accouplement (38) s'étendant entre ses extrémités de liaison (40) pour l'autre élément de liaison (36, 36') respectif.

9. Structure de support selon la revendication 8, **caractérisée en ce que** chaque élément de liaison (36, 36') est relié, par une extrémité, à une partie d'entretoise (8) arquée de l'une des entretoises de support (6) et, par l'extrémité opposée, à une partie d'entretoise (8') arquée de l'autre entretoise de support (6').

10. Structure de support selon l'une des revendications précédentes, au moins un élément de raidissement (26, 26') supplémentaire étant prévu en tant que liaison entre deux entretoises de support (6, 6'), les surfaces extérieures (24) courbées de manière concave des parties d'entretoises (8, 8') arquées de deux entretoises de support (6, 6') étant reliées entre elles au moyen de l'élément de raidissement (26, 26').

11. Structure de support selon l'une des revendications précédentes, **caractérisée en ce que** plusieurs éléments de raidissement (26, 26') s'étendant horizontalement sont disposés à la même hauteur, de préférence les éléments de raidissement (26, 26') formant un anneau de raidissement (30, 30') périphérique, disposé sensiblement horizontalement lors du fonctionnement.

12. Structure de support selon l'une des revendications précédentes, **caractérisée en ce que** chaque entretoise de support (6, 6') est formée à partir de plusieurs parties d'entretoises rectilignes et plusieurs parties d'entretoises courbées de manière arquée (8, 8', 10, 10'), de préférence au moins une partie d'entretoise rectiligne (10, 10') étant disposée entre deux parties d'entretoises (8, 8') courbées de manière arquée.

13. Structure de support selon l'une des revendications précédentes, **caractérisée en ce que** les parties d'entretoises (8, 8') incurvées de manière arquée d'une entretoise de support (6, 6') s'étendent en alternance de manière incurvée dans des directions sensiblement opposées.

14. Structure de support selon l'une des revendications précédentes, **caractérisée en ce que** les entretoises de support (6, 6') présentent, à leurs extrémités supérieures (4), des parties d'entretoises (12) rectilignes, qui s'étendent de manière inclinée suivant un angle par rapport à un axe central (14) et sont conçues pour recevoir un module de transmission de force (104) à l'extrémité supérieure (4) de la structure de support.

15. Structure de fondation (100) pour éoliennes en mer et/ou sur terre comportant
- une structure de support (1) selon l'une des revendications 1 et 14,
- un module de transmission de force (104) disposé à l'extrémité supérieure de la structure de support, et
- de préférence un dispositif adaptateur (102), accouplé à l'extrémité inférieure de la structure de support selon l'invention, pour la compensation de différences de hauteur.
